# EUROPEAN PATENT SPECIFICATION

(11) **EP 4 063 803 B1**
(45) Date of publication and mention of the grant of the patent: **22.01.2025**
(21) Application number: 20889556.5
(22) Date of filing: 31.08.2020
(51) Int. Cl.: G01F 1/84, G01F 15/18

(54) **FIXING DEVICE FOR FLOWMETER COMPONENT**
BEFESTIGUNGSVORRICHTUNG FÜR EINE DURCHFLUSSMESSKOMPONENTE
DISPOSITIF DE FIXATION POUR COMPOSANT DE DÉBITMÈTRE

(30) Priority: 21.11.2019 CN 201911148029
(43) Date of publication of application: 28.09.2022
(73) Proprietor: Walsn Measurement and Control Technology (Hebei) Co., Ltd., Langfang, Hebei 065000 (CN); Walsn Enterprises Ltd., Richmond, BC V6V 1Z5 (CA)
(72) Inventor: MA, Chunli, Langfang, Hebei 065000 (CN); FANG, Weijia, Langfang, Hebei 065000 (CN); WANG, Tao, Langfang, Hebei 065000 (CN)
(74) Representative: Lapienis, Juozas
(86) International application number: PCT/CN2020/112402
(87) International publication number: WO 2021/098334

(56) References cited:
- WO-A1-2018/164670
- WO-A2-96/08697
- CN-A- 1 764 827
- CN-A- 101 840 212
- CN-A- 101 981 417
- CN-A- 101 981 417
- CN-A- 110 806 240
- CN-U- 206 420 527
- US-A1- 2012 048 034

## Description

### TECHNICAL FIELD

The invention relates to the field of measurement technologies, and more particularly to a fixing device for a flowmeter component.

### BACKGROUND

In a Coriolis mass flowmeter, a driver and a sensor of the flowmeter are fixed through a support. A design form and physical parameters (mass and stiffness) of the support have a crucial impact on zero-point stability and anti-interference performance of the flowmeter. At present, the support is mostly manufactured by sheet metal punching.

In realizing the invention, the inventors found at least the following problems in the related art. In particular, the sheet metal manufactured support is poor in strength, which will produce different degrees of deformation after being fixed with a flow tube. In addition, in a working state of the flowmeter, the flow tube would cause the support to vibrate, which would lead to an adverse impact on the zero-point stability of the flowmeter due to relatively weak stiffness and asymmetry of the sheet metal manufactured support.

Document WO 2018/164670 A1 is known, which relates to a brace bar that is removably attachable to vibratory conduits of a flowmeter, a component of a flowmeter sensor assembly that is removably attachable to vibratory conduits, and a method of forming a flowmeter. Said document discloses, among other things, a clamping collar for a driver and pickoff sensors, said clamping collar being made of a first portion and a second portion that are held together with a fastener. Attached to one first portion is a coil assembly, while the adjacent first portion has a magnet assembly attached thereto.

However, the solution disclosed in the above-mentioned document does not resolve the problems as described above and addressed by the claimed invention.

### SUMMARY

Accordingly, the invention provides a fixing device for a flowmeter component, to solve the problems in the related art that the sheet metal manufactured support resulting from the poor strength would produce deformation after being fixed with the flow tube, and the relatively weak stiffness and asymmetry of the sheet metal manufactured support have an adverse impact on the zero-point stability of the flowmeter.

In order to achieve the above purpose, the invention provides a fixing device for a flowmeter component. The fixing device includes two fixing supports, and the two fixing supports are configured to be fixed on two sides of the flowmeter component respectively. Each of the two fixing supports is formed with a connecting arc, and the connecting arc is axisymmetric about a vertical direction of the fixing support.

In the above-mentioned fixing device for the flowmeter component, the fixing device for the flowmeter component further includes balancing blocks, and the balancing blocks are respectively fixed on sides of the two fixing supports to make the fixing device for the flowmeter component mass-symmetric.

In the above-mentioned fixing device for the flowmeter component, each of the two fixing supports is made of a rectangular tube with a rectangular cross-section.

In an embodiment, in the above-mentioned fixing device for the flowmeter component, the fixing device is mass-symmetric through machining the rectangular tube.

In an embodiment, in the above-mentioned fixing device for the flowmeter component, a first mounting slot is defined on the side of each of the two fixing supports in contact with the flowmeter component, and each of the two fixing supports is configured to be fixedly connected to the flowmeter component through the first mounting slot.

In an embodiment, in the above-mentioned fixing device for the flowmeter component, the fixing device for the flowmeter component further includes first fasteners. Each of the first fasteners passes through the first mounting slot and is configured to be inserted into the flowmeter component to thereby fix the flowmeter component with a corresponding one of the two fixing supports.

In an embodiment, in the above-mentioned fixing device for the flowmeter component, a second mounting slot is defined on the side of each of the two fixing supports in contact with a corresponding one of the balancing blocks, and each of the two fixing supports is fixedly connected to the corresponding one of the balancing blocks through the second mounting slot.

In an embodiment, in the above-mentioned fixing device for the flowmeter component, a mounting hole is defined on each of the balancing blocks, and each of the balancing blocks is fixedly connected to a corresponding one of the two fixing supports through the mounting hole.

In an embodiment, in the above-mentioned fixing device for the flowmeter component, the fixing device for the flowmeter component further includes second fasteners. Each of the second fasteners passes through the mounting hole and the second mounting slot and fixes each of the two fixing supports with the corresponding one of the balancing blocks.

According to the technical solutions of the invention, one embodiment of the invention as described above may have advantages or beneficial effects as follows.

One end of the fixing support is disposed with the connecting arc. The fixing support is fixedly connected to a flow tube of a flowmeter through the connecting arc, and the connecting arc is axisymmetric about the vertical direction of the fixing support. In this way, when the fixing support is fixed to the flow tube of the flowmeter through the connecting arc, connection stiffness of the fixing support and the flow tube can be ensured to be symmetrical along a middle plane of the flow tube, effectively avoiding undesirable deformation when the flow tube vibrates in a working process. Two sides of the flowmeter component are respectively fixed with the fixing supports, that is, the flowmeter component is fixed to the flow tubes of the flowmeter through the connecting arcs on the two fixing supports. When the flowmeter component is a driver on a Coriolis mass flowmeter, the two fixing supports are fixed to two sides of the driver respectively, and the driver is fixed to flow tubes of the Coriolis mass flowmeter through the connecting arcs on the fixing supports, so as to complete the installation and fixation of the driver. This structure can make the connection stiffnesses of the fixing support and the flow tube be symmetrical about the middle plane of the flow tube. In addition, it can avoid the undesirable deformation caused by vibration in a working process of the flow tubes, and improve the zero-point stability and overall performance of the Coriolis mass flowmeter.

The further effects of the above non-conventional implementations will be described below in combination with specific embodiments.

### BRIEF DESCRIPTION OF DRAWINGS

The accompanying drawings are for a better understanding of the invention and do not constitute a limitation of the invention.
FIG. 1 illustrates a schematic structural diagram of a fixing device for a flowmeter component according to an embodiment of the invention.
FIG. 2 illustrates a schematic structural diagram of a fixing support of the fixing device for a flowmeter component according to an embodiment of the invention.
FIG. 3 illustrates a schematic diagram of a structure of a fixing support, manufactured by machining, of the fixing device for a flowmeter component according to an embodiment of the invention.
FIG. 4 illustrates a schematic structural diagram of the fixing support of the fixing device for a flowmeter component according to the embodiment of the invention from another perspective.
FIG. 5 illustrates a schematic cross-sectional view of the fixing device for a flowmeter component according to an embodiment of the invention.

The above-mentioned drawings include reference numerals as follows: 1-flowmeter component, 2-fixing support, 3-connecting arc, 4-balancing block, 5-first mounting slot, 6-first fastener, 7-second mounting slot, 8-mounting hole, and 9-second fastener.

### DETAILED DESCRIPTION OF EMBODIMENTS

Exemplary embodiments of the invention will be illustrated below with reference to the accompanying drawings, various details of the illustrated embodiments of the invention are for ease of understanding, which should be considered merely to be illustrative. Therefore, those skilled in the art should recognize that various changes and modifications can be made to the illustrated embodiments herein without departing from the scope of the invention, which is defined by the appended claims. Similarly, for clarity and conciseness, illustrations of well-known functions and structures are omitted in the following description.

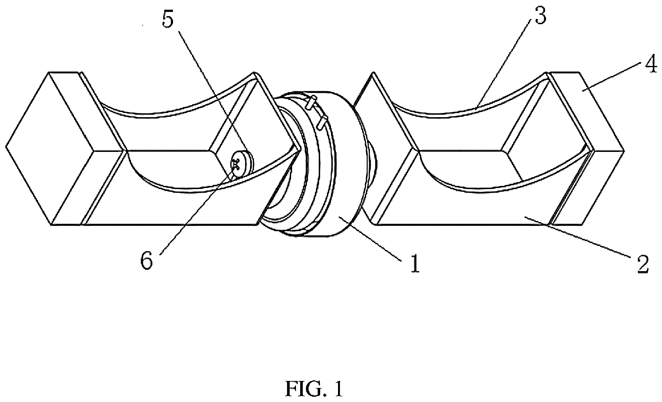

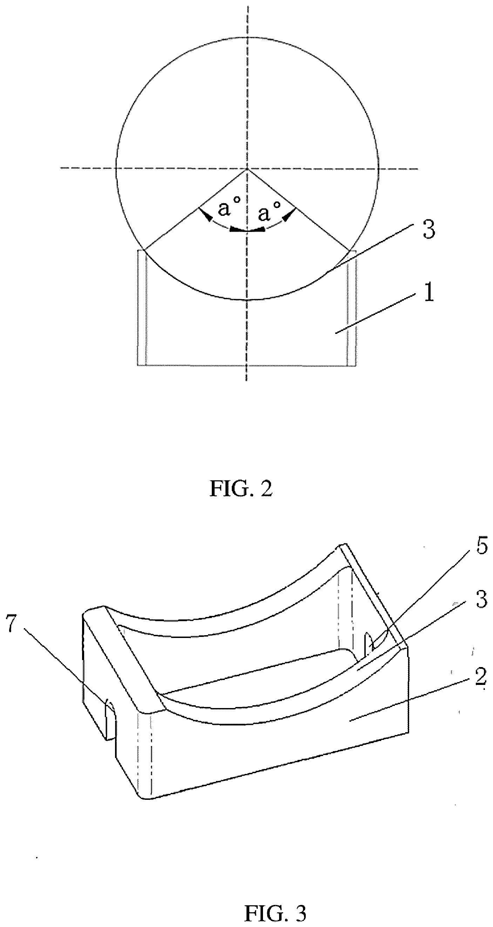

As shown in FIG. 1 and FIG. 2, an embodiment of the invention provides a fixing device for a flowmeter component. The fixing device includes two fixing supports 2. The two fixing supports 2 are configured (i.e., structured and arranged) to be respectively fixed on two sides of the flowmeter component 1. Each of the two fixing supports 2 is formed with a connecting arc 3, and the connecting arc 3 is axisymmetric about a vertical direction of the fixing support 2.

In the fixing device for the flowmeter component provided by the embodiment of the invention, one end of each of the fixing supports 2 is formed with the connecting arc 3, and each of the fixing supports 2 is fixedly connected to a flow tube of the flowmeter through the connecting arc 3. The connecting arc 3 is axisymmetric about the vertical direction (generally a direction perpendicular to a horizontal direction of the fixing support 2 as well as an arrangement direction of the two fixing supports 2), that is, when another end of the fixing support 2 opposite to the connecting arc 3 is placed horizontally, central angles of the two arc segments bisected by a vertical axis are equal, and the central angles are both a°. In this situation, when each of the fixing supports 2 is fixed to the flow tube of the flowmeter through the connecting arcs 3, the connection stiffness of each of the fixing supports 2 and the flow tube can be ensured to be symmetrical about the middle plane of the flow tube, effectively avoiding undesirable deformation when the flow tube vibrates in a working process. Two sides of the flowmeter component 1 are respectively fixed with the fixing supports 2, that is, the flowmeter component 1 is fixed to the flow tubes of the flowmeter through the connecting arcs 3 on the two fixing supports 2. When the flowmeter component 1 is a driver on a Coriolis mass flowmeter, the two fixing supports 2 are fixed to two sides of the driver respectively, and the driver is fixed to the flow tubes of the Coriolis mass flowmeter through the connecting arcs 3 on the two fixing supports 2, so as to complete installation and fixation of the driver. This structure can make the connection stiffness of each of the fixing supports 2 and the flow tube be symmetrical about the middle plane of the flow tube. In addition, it can avoid the undesirable deformation caused by vibration in a working process of the flow tubes, and improve the zero-point stability and overall performance of the Coriolis mass flowmeter.

In an embodiment, in the fixing device for the flowmeter component provided by the above embodiment of the invention, when the fixing supports 2 are configured to fix the driver on the Coriolis mass flowmeter, the fixing supports 2 are respectively fixed to flow tubes through the connecting arcs 3, and a fixing method of the connecting arcs 3 fixed to the flow tubes may be welding, or other fixing method meeting the requirement. In some embodiments, for the fixing supports provided by the above embodiment of the invention, the connecting arcs 3 are fixed to the respective flow tubes by vacuum brazing.

As shown in FIG. 1, the fixing device for the flowmeter component provided by the embodiment of the invention may further include balancing blocks 4. The balancing blocks 4 are respectively fixed on the sides (each facing away from the flowmeter component 1) of the two fixing supports 2 to make the fixing device mass-symmetric. By setting the balancing blocks 4 and fixing the balancing blocks 4 to the outer sides of the respective fixing supports 2, the whole fixing device can be adjusted to be mass-symmetric about a midpoint between the two flow tubes. In this way, when the flowmeter component 1 is fixed to the flow tubes through the connecting arcs 3 on the fixing supports 2, the overall stability of the flowmeter can be improved and the undesirable deformation caused by vibration in a working process of the flow tubes can be effectively avoided.

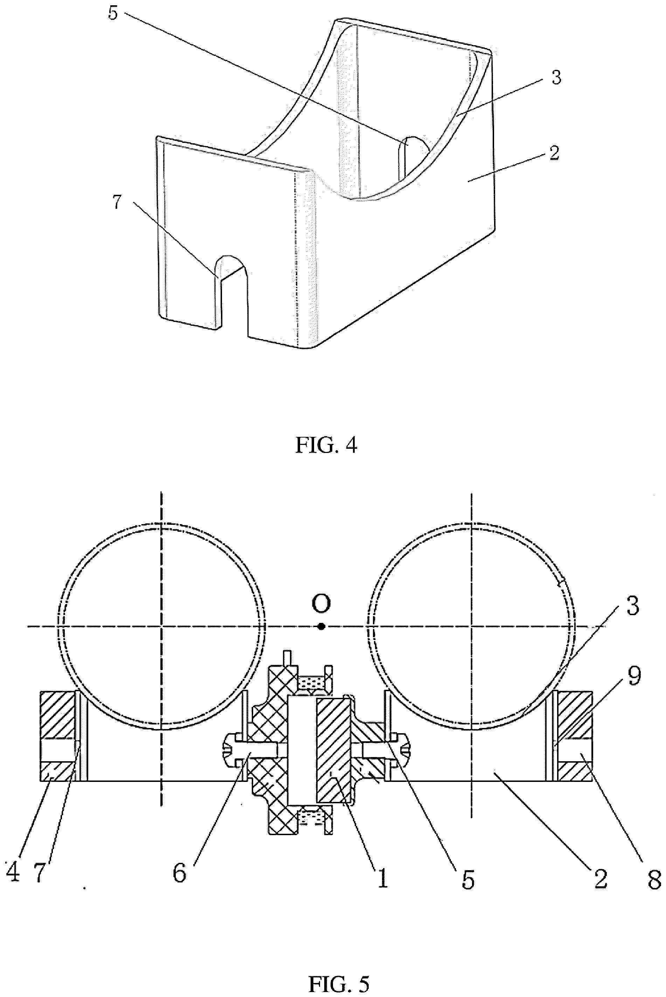

As shown in FIG. 4, in the fixing device for the flowmeter component provided by the above embodiment of the invention, each of the fixing supports 2 may be made of a rectangular tube with a rectangular cross-section. The fixing supports 2 is manufactured by machining a standard rectangular tube. This manufacturing method not only is easy to process, low cost and reduces purchase cost, but also can ensure the connecting arc 3 to be axisymmetric about the vertical direction of the fixing support. In addition, it can avoid the problems of poor strength and weak stiffness of the fixing supports 2 after sheet metal punching, and improve the strength and stiffness of the fixing supports 2. In some embodiments, in the fixing device for a flowmeter component provided by the above embodiment of the invention, the material of the rectangular tube may be steel or other metal material. In some embodiments, in the fixing device for a flowmeter component provided by the above embodiment of the invention, the fixing supports 2 may be manufactured by machining a rectangular steel tube, and the rectangular steel tube has good strength and stiffness and low cost, is easy to process, and reduces the purchase cost.

As shown in FIG. 3, in the fixing device for the flowmeter component provided by the embodiment of the invention, the fixing device is made to be mass-symmetric through machining the rectangular tube. In practical applications, the whole fixing device can be ensured to be mass-symmetric about a midpoint O (see FIG.5) between the two flow tubes only by machining on the rectangular tube. This method is easy to process and low cost, and reduces the purchase cost.

As shown in FIG. 1 and FIG. 4, in the fixing device for the flowmeter component provided by the embodiment of the invention, a first mounting slot 5 is defined on the side of each of the fixing supports 2 in contact with the flowmeter component 1, and each of the fixing supports 2 is fixedly connected to the flowmeter component 1 through the first mounting slot 5. By defining the first mounting slot 5 on one side of each of the fixing supports 2 to achieve fixed connection between the fixing supports 2 and the flowmeter component 1, it is convenient to fixedly install the fixing supports 2 on the flowmeter component 1.

As shown in FIG. 1 and FIG. 4, the fixing device for the flowmeter component provided by the embodiment of the invention may further include first fasteners 6. Each of the first fasteners 6 passes through the first mounting slots 5 and is configured to be inserted into the flowmeter component 1 to thereby fix the flowmeter component 1 with a corresponding one of the fixing supports 2. By passing the first fasteners 6 through the first mounting slots 5 respectively and inserting them into the flowmeter component 1, the flowmeter component 1 and the fixing supports 2 can be conveniently fixed together. In some embodiments, in the fixing device for the flowmeter component provided by the embodiment of the invention, when threads are provided in the first mounting slots 5, the first fasteners 6 are bolts or screws, and parts in contact with the fasteners 6 on the flowmeter component 1 are provided with threads correspondingly.

As shown in FIG. 4 and FIG. 5, in the fixing device for the flowmeter component provided by the embodiment of the invention, a second mounting slot 7 may be defined on the side of each of the fixing supports 2 in contact with a corresponding one of the balancing blocks 4, and each of the fixing supports 2 is fixedly connected to the corresponding one of the balancing blocks 4 through the second mounting slot 7. By defining the second mounting slot 7 on the side of each of the fixing support 2 to achieve fixed connection between the fixing support 2 and the corresponding balancing block 4, it is convenient to fixedly install the balancing blocks 4 on the fixing supports 2 respectively.

As shown in FIG. 5, the fixing device for the flowmeter component provided by the embodiment of the invention may further include second fasteners 9. Each of the balancing blocks 4 is disposed with a mounting hole 8, and each of the second fasteners 9 passes through the mounting holes 8 and the second mounting slot 7 and fixes each of the fixing supports 2 with the corresponding one of the balancing blocks 4. By passing the second fasteners 9 through the respective mounting holes 8 on the balancing blocks 4 and the respective second mounting slots 7 on the fixing supports 2, it is convenient to fixedly connect the fixing supports 2 with the respective balancing blocks 4 together.

In some embodiments, in the fixing device for a flowmeter component provided by the embodiment of the invention, the flowmeter component 1 may be a driver or a sensor of a Coriolis mass flowmeter, that is, the driver or the sensor of the Coriolis mass flowmeter is fixed to the flow tubes of the Coriolis mass flowmeter through the fixing supports 2.

In the following, the fixing of the driver of the Coriolis mass flowmeter taken as an example, an assembly process of the fixing device for the flowmeter component provided by the embodiment of the invention will be described below.

As shown in FIG. 5, when the flowmeter component 1 is the driver of the Coriolis mass flowmeter, first, the first fasteners 6 are passed through the respective first mounting slots 5 on the fixing supports 2 and inserted into the driver to thereby fix the fixing supports 2 on two sides of the driver respectively; then, the second fasteners 9 are passed through the respective mounting holes 8 on the balancing blocks 4 and the respective second mounting slots 7 on the fixing supports 2 to thereby fix the balancing blocks 4 to outer sides of the fixing supports 2 respectively. In this way, the assembly of the fixing device is completed. Finally, the connecting arcs 3 on the fixing supports 2 are respectively fixed to flow tubes of the Coriolis mass flowmeter by vacuum brazing, so as to complete the fixed installation of the driver. This structure can make the connection stiffness of each of the fixing supports 2 and the flow tube be symmetrical about the middle plane of the flow tube, avoiding the undesirable deformation caused by vibration in a working process of the flow tube, and improving the zero-point stability and overall performance of the Coriolis mass flowmeter.

It can be seen that, in the fixing device for the flowmeter component provided by the embodiments of the invention, one end of each of the fixing supports 2 is disposed with the connecting arc 3, and the fixing supports 2 are fixedly connected to the flow tubes of the flowmeter respectively through the connecting arcs 3. The connecting arc 3 is axisymmetric about the vertical direction, that is, when another end of the fixing support 2 opposite to the connecting arc 3 is placed horizontally, central angles of two arc segments bisected by the vertical axis are equal, and the central angles are both a°. In this situation, when the fixing supports 2 are fixed to the flow tubes of the flowmeter through the connecting arcs 3, the connection stiffness of each of the fixing supports 2 and the flow tube can be ensured to be symmetrical about the middle plane of the flow tube, effectively avoiding the undesirable deformation caused by vibration in a working process of the flow tube. Two sides of the flowmeter component 1 are respectively fixed with the fixing supports 2, that is, the flowmeter component 1 is fixed to the flow tubes of the flowmeter through the connecting arcs 3 on the two fixing supports 2. When the flowmeter component 1 is the driver on the Coriolis mass flowmeter, the two fixing supports 2 are fixed to two sides of the driver respectively, and the driver is fixed to the flow tubes of the Coriolis mass flowmeter through the connecting arcs 3 on the two fixing supports 2, so as to complete installation and fixation of the driver. This structure can make the connection stiffness of each of the fixing supports 2 and the flow tube be symmetrical about the middle plane of the flow tube. In addition, it can avoid the undesirable deformation caused by vibration in a working process of the flow tube, and improve the zero-point stability and overall performance of the Coriolis mass flowmeter.

The above specific embodiments do not constitute a limitation to the protection scope of the invention, which is defined by the appended claims. It is understood to those skilled in the art that various modifications, combinations, sub-combinations, and substitutions may occur, depending upon design requirements and other factors.

## Claims

1. A fixing device for a flowmeter component, comprising:
two fixing supports (2), configured to be respectively fixed on two sides of the flowmeter component (1);
wherein each of the two fixing supports (2) is formed with a connecting arc (3), and the connecting arc (3) being axisymmetric about a vertical direction of the fixing support (2),
**characterized in that**
each of the two fixing supports (2) is made of a rectangular tube with a rectangular cross-section, and **in that**
the fixing device further comprises balancing blocks (4), respectively fixed on sides of the two fixing supports (2) to make the fixing device be mass-symmetric.

2. The fixing device according to claim 1, wherein the fixing device is mass-symmetric through machining the rectangular tube.

3. The fixing device according to claim 1, wherein a first mounting slot (5) is defined on the side of each of the two fixing supports (2) in contact with the flowmeter component (1), and each of the two fixing supports (2) is configured to be fixedly connected to the flowmeter component (1) through the first mounting slot (5).

4. The fixing device according to claim 3, further comprising:
first fasteners (6), wherein each of the first fasteners (6) is configured to pass through the first mounting slot (5) and insert into the flowmeter component (1) to thereby fix the flowmeter component (1) with a corresponding one of the two fixing supports (2).

5. The fixing device according to claim 1, wherein a second mounting slot (7) is defined on the side of each of the two fixing supports (2) in contact with a corresponding one of the balancing blocks (4), and each of the two fixing supports (2) is fixedly connected to the corresponding one of the balancing blocks (4) through the second mounting slot (7).

6. The fixing device according to claim 5, wherein a mounting hole (8) is defined on each of the balancing blocks (4), and each of the balancing blocks (4) is fixedly connected to a corresponding one of the two fixing supports (2) through the mounting hole (8).

7. The fixing device according to claim 6, further comprising:
second fasteners (9), wherein each of the second fasteners (9) passes through the mounting hole (8) and the second mounting slot (7) and fixes each of the two fixing supports (2) with the corresponding one of the balancing blocks (4).

8. The fixing device according to claim 1, wherein:
the two fixing supports (2) and the flowmeter component (1) are arranged along a first direction; and
the balancing blocks (4) are facing away from the flowmeter component (1);
the connecting arcs (3) are axisymmetric about a second direction perpendicular to the first direction.

9. The fixing device according to claim 8, wherein the flowmeter component is a driver of a Coriolis mass flowmeter.

10. The fixing device according to claim 8, wherein the fixing device is mass-symmetric about a midpoint between two flow tubes respectively fixed to the two fixing supports (2) through the connecting arcs (3) of the two fixing supports (2).

11. The fixing device according to claim 8, wherein central angles of two arc segments of the connecting arc (3) bisected by a vertical axis on the second direction are equal.

## Patentansprüche

1. Befestigungsvorrichtung für eine Komponente eines Durchflussmessers, umfassend:
zwei Befestigungsstützen (2), die so konfiguriert sind, dass sie jeweils an zwei Seiten der Komponente (1) des Durchflussmessers befestigt sind;
wobei jede von zwei Befestigungsstützen (2) mit einem Anschlussbogen (3) ausgebildet ist, und der Anschlussbogen (3) achsensymmetrisch zu einer vertikalen Richtung der Befestigungsstütze (2) ist,
**dadurch gekennzeichnet, dass**
jede von zwei Befestigungsstützen (2) aus einem Rechteckrohr mit einem Rechteckquerschnitt besteht, und dass
die Befestigungsvorrichtung weiter Ausgleichsblöcke (4) umfasst, die jeweils an den Seiten von zwei Befestigungsstützen (2) befestigt sind, um der Befestigungsvorrichtung Massensymmetrie zu verleihen.

2. Befestigungsvorrichtung nach Anspruch 1, wobei die Befestigungsvorrichtung durch die Bearbeitung des Rechteckrohrs massensymmetrisch ist.

3. Befestigungsvorrichtung nach Anspruch 1, wobei ein erster Montageschlitz (5) an der Seite jeder von zwei Befestigungsstützen (2) im Kontakt mit der Komponente (1) des Durchflussmessers definiert ist, und jede von zwei Befestigungsstützen (2) so konfiguriert ist, dass sie durch den ersten Montageschlitz (5) mit der Komponente (1) des Durchflussmessers fest verbunden ist.

4. Befestigungsvorrichtung nach Anspruch 3, weiter umfassend:
erste Verbindungselemente (6), wobei jedes der ersten Verbindungselemente (6) so konfiguriert ist, dass es durch den ersten Montageschlitz (5) verläuft und in die Komponente (1) des Durchflussmessers eingeführt wird, um dadurch die Komponente (1) des Durchflussmessers mit einer entsprechenden von zwei Befestigungsstützen (2) zu befestigen.

5. Befestigungsvorrichtung nach Anspruch 1, wobei ein zweiter Montageschlitz (7) an der Seite jeder von zwei Befestigungsstützen (2) im Kontakt mit einem entsprechenden der Ausgleichsblöcke (4) definiert ist, und jede von zwei Befestigungsstützen (2) durch den zweiten Montageschlitz (7) mit einem entsprechenden der Ausgleichsblöcke (4) fest verbunden ist.

6. Befestigungsvorrichtung nach Anspruch 5, wobei ein Montageloch (8) an jedem der Ausgleichsblöcke (4) definiert ist, und jeder der Ausgleichsblöcke (4) durch das Montageloch (8) mit einer entsprechenden von zwei Befestigungsstützen (2) fest verbunden ist.

7. Befestigungsvorrichtung nach Anspruch 6, weiter umfassend:
zweite Verbindungselemente (9), wobei jedes der zweiten Verbindungselemente (9) durch das Montageloch (8) und den zweiten Montageschlitz (7) verläuft und jede von zwei Befestigungsstützen (2) mit einem entsprechenden der Ausgleichsblöcke (4) befestigt.

8. Befestigungsvorrichtung nach Anspruch 1, wobei:
zwei Befestigungsstützen (2) und die Komponente (1) des Durchflussmessers entlang einer ersten Richtung angeordnet sind; und
die Ausgleichsblöcke (4) von der Komponente (1) des Durchflussmessers abgewandt sind;
die Anschlussbogen (3) achsensymmetrisch zu einer zweiten Richtung sind, die senkrecht zur ersten Richtung verläuft.

9. Befestigungsvorrichtung nach Anspruch 8, wobei die Komponente des Durchflussmessers ein Treiber eines Coriolis-Massendurchflussmessers ist.

10. Befestigungsvorrichtung nach Anspruch 8, wobei die Befestigungsvorrichtung massensymmetrisch zu einem Mittelpunkt zwischen zwei Durchflussrohren ist, die jeweils mit zwei Befestigungsstützen (2) durch die Anschlussbogen (3) von zwei Befestigungsstützen (2) befestigt sind.

11. Befestigungsvorrichtung nach Anspruch 8, wobei Zentriwinkel von zwei Bogensegmenten des Anschlussbogens (3), die durch eine vertikale Achse in der zweiten Richtung halbiert werden, gleich sind.

## Revendications

1. Dispositif de fixation pour un composant de débitmètre, comprenant:
deux supports (2) de fixation, configurés pour être respectivement fixés sur deux côtés du composant (1) débitmètre;
dans lequel chacun des deux supports (2) de fixation est formé avec un arc (3) de connexion, et l'arc (3) de connexion étant axisymétrique par rapport à une direction verticale du support (2) de fixation,
**caractérisé en ce que**
chacun des deux supports (2) de fixation est constitué d'un tube rectangulaire de section rectangulaire, et **en ce que**
le dispositif de fixation comprend en outre des blocs (4) d'équilibrage, respectivement fixés sur les côtés des deux supports (2) de fixation pour rendre le dispositif de fixation symétrique en masse.

2. Dispositif de fixation selon la revendication 1, dans lequel le dispositif de fixation est symétrique en masse grâce à l'usinage du tube rectangulaire.

3. Dispositif de fixation selon la revendication 1, dans lequel une première fente (5) de montage est définie du côté de chacun des deux supports (2) de fixation en contact avec le composant (1) débitmètre, et chacun des deux supports (2) de fixation est configuré pour être connecté de manière fixe au composant (1) débitmètre par l'intermédiaire de la première fente (5) de montage.

4. Dispositif de fixation selon la revendication 3, comprenant en outre:
premières attaches (6), chacune des premières attaches (6) étant configurée pour passer à travers la première fente (5) de montage et s'insérer dans le composant (1) débitmètre pour ainsi fixer le composant (1) débitmètre avec l'un correspondant des deux supports (2) de fixation.

5. Dispositif de fixation selon la revendication 1, dans lequel une seconde fente (7) de montage est définie du côté de chacun des deux supports (2) de fixation en contact avec l'un correspondant des blocs (4) d'équilibrage, et chacun des deux les supports (2) de fixation sont reliés de manière fixe à celui correspondant des blocs (4) d'équilibrage par l'intermédiaire de la seconde fente (7) de montage.

6. Dispositif de fixation selon la revendication 5, dans lequel un trou (8) de montage est défini sur chacun des blocs (4) d'équilibrage, et chacun des blocs (4) d'équilibrage est relié de manière fixe à l'un correspondant des deux supports (2) de fixation par l'intermédiaire du trou (8) de montage.

7. Dispositif de fixation selon la revendication 6, comprenant en outre:
secondes attaches (9), chacune des secondes attaches (9) passant à travers le trou (8) de montage et la seconde (7) fente de montage en fixant chacun des deux supports (2) de fixation avec celui correspondant des blocs (4) d'équilibrage.

8. Dispositif de fixation selon la revendication 1, dans lequel:
les deux supports (2) de fixation et le composant (1) débitmètre sont disposés le long d'une première direction; et
les blocs (4) d'équilibrage sont orientés à l'opposé du composant (1) débitmètre;
les arcs (3) de connexion sont axisymétriques relativement à une seconde direction perpendiculaire à la première direction.

9. Dispositif de fixation selon la revendication 8, dans lequel le composant débitmètre est un driver d'un débitmètre massique de Coriolis.

10. Dispositif de fixation selon la revendication 8, dans lequel le dispositif de fixation est symétrique en masse relativement à un point médian entre deux conduites respectivement fixés aux deux supports (2) de fixation à travers les arcs (3) de connexion des deux supports (2) de fixation.

11. Dispositif de fixation selon la revendication 8, dans lequel les angles centraux de deux segments d'arc de l'arc (3) de connexion divisé en deux par un axe vertical dans la seconde direction sont égaux.
